# EUROPEAN PATENT APPLICATION

(11) **EP 4 203 137 A1**
(43) Date of publication of application: **28.06.2023**
(21) Application number: 20954464.2
(22) Date of filing: 23.09.2020
(51) Int. Cl.: H01M 10/0587, H01M 50/545

(54) **BATTERY AND ELECTRONIC DEVICE HAVING SAME**

(71) Applicant: Ningde Amperex Technology Limited, Ningde, Fujian 352100 (CN)
(72) Inventor: ZENG, Qiao, Ningde, Fujian 352100 (CN); YAN, Dongyang, Ningde, Fujian 352100 (CN); XIE, Zaibin, Ningde, Fujian 352100 (CN)
(74) Representative: Icosa
(86) International application number: PCT/CN2020/117216
(87) International publication number: WO 2022/061610

(57) **Abstract**

A battery includes an electrode assembly and a housing assembly. The housing assembly defines an accommodation space for accommodating the electrode assembly. The housing assembly is made of a conductive material. The housing assembly includes a first housing and a second housing electrically insulated from the first housing. The electrode assembly includes a first electrode plate, a second electrode plate, and a separator. The first electrode plate includes a first current collector and a first active material layer, and the second electrode plate includes a second current collector and a second active material layer. The first current collector includes a first blank foil region. The first blank foil region is located at an edge region of the first current collector. The first blank foil region extends from a winding start end of the first electrode plate toward a winding termination end of the first electrode plate. The first blank foil region is electrically connected to the first housing. The second current collector includes a second blank foil region. The second blank foil region is located at a winding start end and/or a winding termination end of the second electrode plate. The second blank foil region is electrically connected to the second housing. This application further provides an electronic device containing the battery.

## Description

### TECHNICAL FIELD

This application relates to the electrochemical field, and in particular, to a battery and an electronic device containing the battery.

### BACKGROUND

Lithium-ion batteries are widely used in various electronic devices by virtue of a high energy density, a long cycle life, environmental friendliness, and other merits. However, the rapid increase of consumers' demand for functions of electronic devices has imposed more stringent requirements on the batteries that serve as a power source of the electronic devices. Currently, a jelly roll in a battery is usually connected to a housing by means of a tab. However, the tab itself has a particular thickness, and the thickness leads to a great waste of internal space of the battery, and in turn, affects an energy density of the entire battery.

### SUMMARY

In view of the situation above, it is necessary to provide a battery of a high energy density.

This application further provides an electronic device containing the battery.

A battery is disclosed, including an electrode assembly and a housing assembly. The housing assembly defines an accommodation space for accommodating the electrode assembly. The housing assembly is made of a conductive material. The housing assembly includes a first housing and a second housing connected to the first housing. The first housing is electrically insulated from the second housing. The electrode assembly includes a first electrode plate, a second electrode plate, and a separator located between the first electrode plate and the second electrode plate. The electrode assembly is formed by winding the first electrode plate, the second electrode plate, and the separator. The first electrode plate includes a first current collector and a first active material layer disposed on the first current collector. The second electrode plate includes a second current collector and a second active material layer disposed on the second current collector. The first current collector includes a first blank foil region. The first blank foil region is located at an edge region of the first current collector, and the first blank foil region extends from a winding start end of the first electrode plate toward a winding termination end of the first electrode plate. The first blank foil region is electrically connected to one of the first housing or the second housing. The second current collector includes a second blank foil region. The second blank foil region is located at a winding start end of the second electrode plate and/or a winding termination end of the second electrode plate. The second blank foil region is electrically connected to the other of the first housing or the second housing.

In a possible embodiment, the electrode assembly further includes a winding needle. The first electrode plate, the separator, and the second electrode plate form the electrode assembly by winding around the winding needle that serves as a central axis. The second blank foil region is located at the winding start end of the second electrode plate. The second blank foil region is electrically connected to the winding needle. The winding needle is electrically connected to the first housing or the second housing.

In a possible embodiment, the electrode assembly further includes a winding needle. The first electrode plate, the separator, and the second electrode plate form the electrode assembly by winding around the winding needle that serves as a central axis. The second blank foil region is located at the winding start end of the second electrode plate and the winding termination end of the second electrode plate. The second blank foil region located at the winding start end of the second electrode plate is electrically connected to the winding needle. The winding needle is electrically connected to the second housing. The second blank foil region located at the winding termination end of the second electrode plate is electrically connected to the second housing.

In a possible embodiment, the electrode assembly further includes a winding needle. The first electrode plate, the separator, and the second electrode plate form the electrode assembly by winding around the winding needle that serves as a central axis. The second blank foil region is located at the winding termination end of the second electrode plate.

In a possible embodiment, the first blank foil region is located at each of edge regions on two opposite sides of the first current collector.

In a possible embodiment, at least one side of the first blank foil region is not coated with the first active material layer, and at least one side of the second blank foil region is not coated with the second active material layer.

In a possible embodiment, the battery further includes a first insulation piece. The first insulation piece connects the winding needle and the first housing to electrically insulate the winding needle from the first housing.

In a possible embodiment, the winding needle is formed in one piece or by splicing.

In a possible embodiment, the battery further includes a second insulation piece. The second insulation piece connects the first housing and the second housing to electrically insulate the first housing from the second housing.

An electronic device is disclosed, including any one of the batteries described above.

The first electrode plate and the second electrode plate in the battery according to this application are electrically connected to the first housing and the second housing respectively through the first blank foil region and the second blank foil region respectively. Compared with existing batteries, the design of the battery in this application effectively avoids the waste of internal space of the battery caused by the use of a tab as an intermediate connection structure between the electrode assembly and the housing in the existing batteries, thereby greatly improving space efficiency of the battery, and in turn, effectively improving the energy density and fast charging performance of the battery.

### BRIEF DESCRIPTION OF DRAWINGS

FIG. 1 is a schematic structural diagram of a battery according to an embodiment of this application;
FIG. 2A is a schematic exploded view of the battery shown in FIG. 1;
FIG. 2B is a schematic sectional view of the battery shown in FIG. 1;
FIG. 3 is a schematic sectional view of a housing assembly and a second insulation piece shown in FIG. 1;
FIG. 4 is a schematic sectional view of an electrode assembly according to an embodiment of this application;
FIG. 5A is a schematic sectional view of a first electrode plate according to an embodiment of this application;
FIG. 5B is a schematic sectional view of a second electrode plate according to another embodiment of this application;
FIG. 6A is a schematic expanded view of a first electrode plate according to an embodiment of this application;
FIG. 6B is a schematic expanded view of a first electrode plate according to another embodiment of this application;
FIG. 6C is a schematic expanded view of a first electrode plate according to still another embodiment of this application;
FIG. 7A is a schematic sectional view of a second electrode plate according to an embodiment of this application;
FIG. 7 B is a schematic sectional view of a second electrode plate according to another embodiment of this application;
FIG. 7C is a schematic sectional view of a second electrode plate according to another embodiment of this application;
FIG. 7D is a schematic sectional view of a second electrode plate according to yet another embodiment of this application;
FIG. 8A is a schematic expanded view of a second electrode plate according to an embodiment of this application;
FIG. 8B is a schematic expanded view of a second electrode plate according to another embodiment of this application;
FIG. 8C is a schematic expanded view of a second electrode plate according to still another embodiment of this application;
FIG. 9 is a schematic structural diagram of a battery according to another embodiment of this application;
FIG. 10A is a schematic exploded view of the battery shown in FIG. 9;
FIG. 10B is a schematic sectional view of the battery shown in FIG. 9; and
FIG. 11 is a schematic modular diagram of an electronic device according to an embodiment of this application.

**Reference numerals of main components:**

| | |
|---|---|
| Battery | 10 |
| Electrode assembly | 11 |
| First electrode plate | 111 |
| First current collector | 1111 |
| First active material layer | 1112 |
| First blank foil region | 1113 |
| First edge region | 1114 |
| Second edge region | 1115 |
| Second electrode plate | 112 |
| Second current collector | 1121 |
| Second active material layer | 1122 |
| Second blank foil region | 1123 |
| Separator | 113 |
| Winding needle | 114 |
| Housing assembly | 12 |
| First housing | 121 |
| Top plate | 1211 |
| Second protruding portion | 1212 |
| Second accommodation space | 1213 |
| Second housing | 122 |
| Bottom plate | 1221 |
| Side plate | 1222 |
| First accommodation space | 1223 |
| First surface | 1224 |
| First protruding portion | 1225 |
| Accommodation groove | 1226 |
| Cover plate | 1227 |
| Opening | 1228 |
| Accommodation space | 13 |
| First insulation piece | 14 |
| Second insulation piece | 15 |
| First section | 151 |
| Second section | 152 |
| Hole | 153 |
| Third insulation piece | 16 |
| Through port | 161 |
| Electronic device | 1 |

This application is further described below with reference to the following specific embodiments and the foregoing drawings.

### DETAILED DESCRIPTION OF EMBODIMENTS

The following clearly describes the technical solutions in some embodiments of this application in detail with reference to the drawings hereof. Evidently, the described embodiments are merely a part of but not all of the embodiments of this application.

Unless otherwise defined, all technical and scientific terms used herein bear the same meanings as what is normally understood by a person skilled in the technical field of this application. The terms used in the specification of this application are merely intended to describe specific embodiments but not to limit this application.

The following describes some embodiments of this application in detail with reference to drawings. To the extent that no conflict occurs, the following embodiments and the features in the embodiments may be combined with each other.

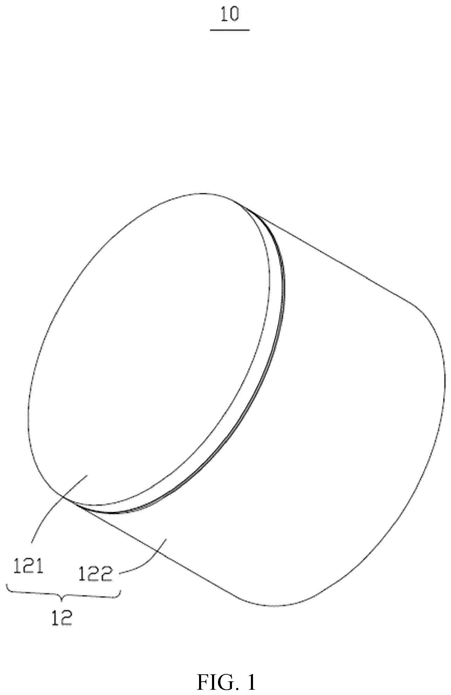

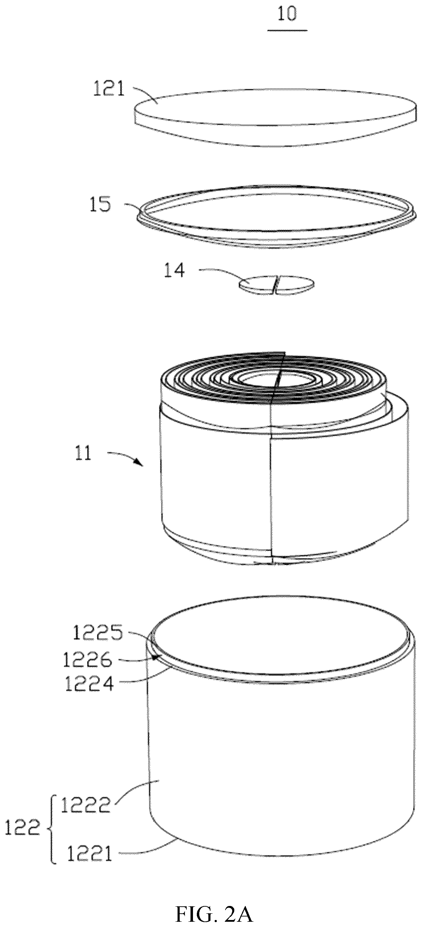

Referring to FIG. 1, an embodiment of this application provides a battery 10. Referring to FIG. 2A, FIG. 3, FIG. 4, FIG. 5A, FIG. 6A, FIG. 7A, and FIG. 8C, the battery 10 includes an electrode assembly 11 and a housing assembly 12. The housing assembly 12 defines an accommodation space 13 for accommodating the electrode assembly 11. The housing assembly 12 is made of a conductive material. The housing assembly 12 includes a first housing 121 and a second housing 122 connected to the first housing 121. The first housing 121 is electrically insulated from the second housing 122. The electrode assembly 11 includes a first electrode plate 111, a second electrode plate 112, and a separator 113 located between the first electrode plate 111 and the second electrode plate 112. The electrode assembly 11 is formed by winding the first electrode plate 111, the second electrode plate 112, and the separator 113. The first electrode plate 111 includes a first current collector 1111 and a first active material layer 1112 disposed on the first current collector 1111. The first current collector 1111 includes a first blank foil region 1113. The first blank foil region 1113 is located at an edge region of the first current collector 1111, and the first blank foil region 1113 extends from a winding start end of the first electrode plate 111 toward a winding termination end of the first electrode plate 111. The first blank foil region 1113 is electrically connected to the first housing 121. The second electrode plate 112 includes a second current collector 1121 and a second active material layer 1122 disposed on the second current collector 1121. The second current collector 1121 includes a second blank foil region 1123. The second blank foil region 1123 is located at a winding start end of the second electrode plate 112 and/or a winding termination end of the second electrode plate 112. The second blank foil region 1123 is electrically connected to the second housing 122.

The first electrode plate 111 and the second electrode plate 112 in the battery 10 according to this application are electrically connected to the first housing 121 and the second housing 122 respectively through the first blank foil region 1113 and the second blank foil region 1123 respectively. Compared with existing batteries, the design of the battery 10 in this application effectively avoids the waste of internal space of the battery caused by the use of a tab as an intermediate connection structure between the electrode assembly and the housing in the existing batteries, thereby greatly improving space efficiency of the battery 10, and in turn, effectively improving the energy density and fast charging performance of the battery 10.

The conductive material is not limited to one or more of a steel alloy, an aluminum alloy, an iron alloy, a copper alloy, a nickel alloy, or stainless steel.

Understandably, in other embodiments, the first blank foil region 1113 may be electrically connected to the second housing 122. In this case, the second blank foil region 1123 is electrically connected to the first housing 121.

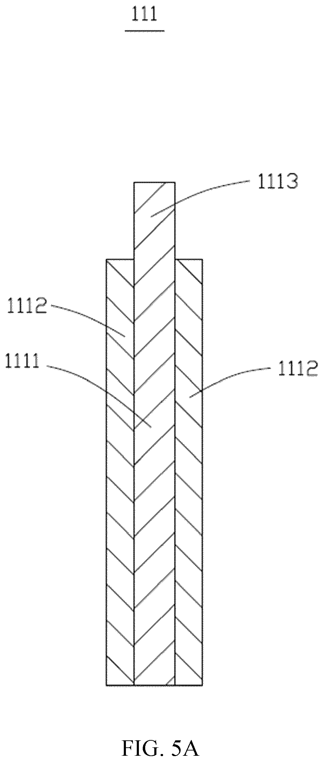

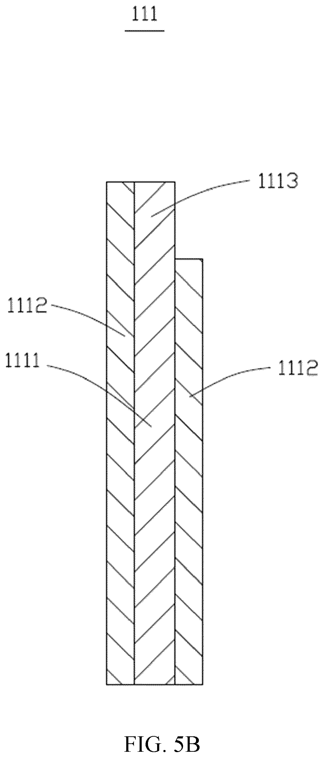

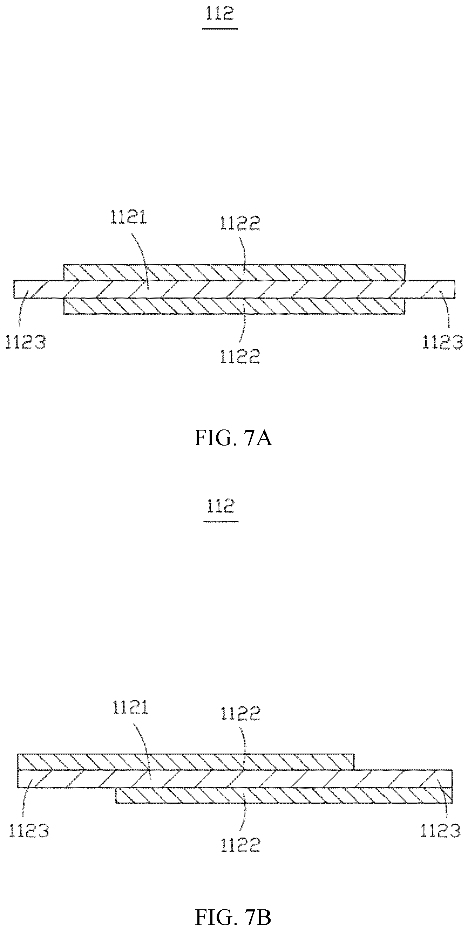

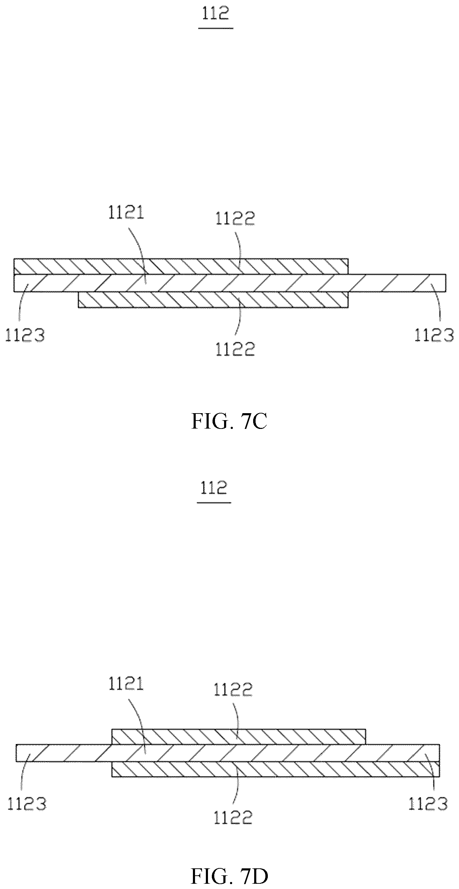

In some embodiments, referring to FIG. 5A and FIG. 5B, at least one side of the first blank foil region 1113 is not coated with the first active material layer 1112. Referring to FIG. 7A, FIG. 7B, FIG. 7C, and FIG. 7D, at least one side of the second blank foil region 1123 is not coated with the second active material layer 1122.

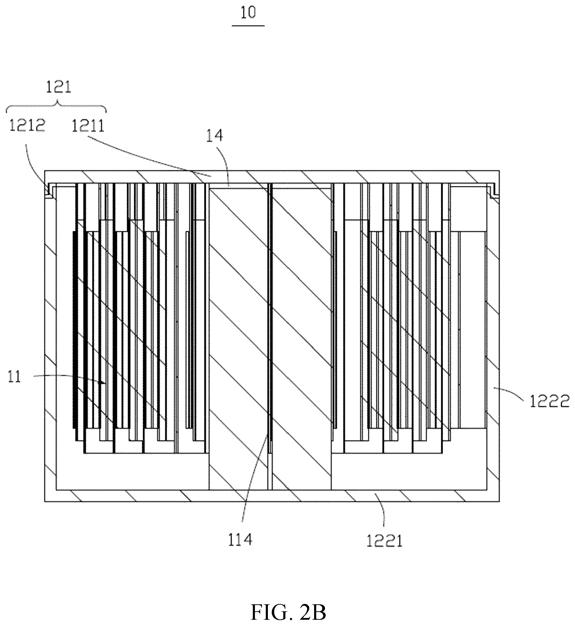

Referring to FIG. 2B, the electrode assembly 11 further includes a winding needle 114. The first electrode plate 111, the separator 113, and the second electrode plate 112 form the electrode assembly 11 by winding around the winding needle 114 that serves as a central axis.

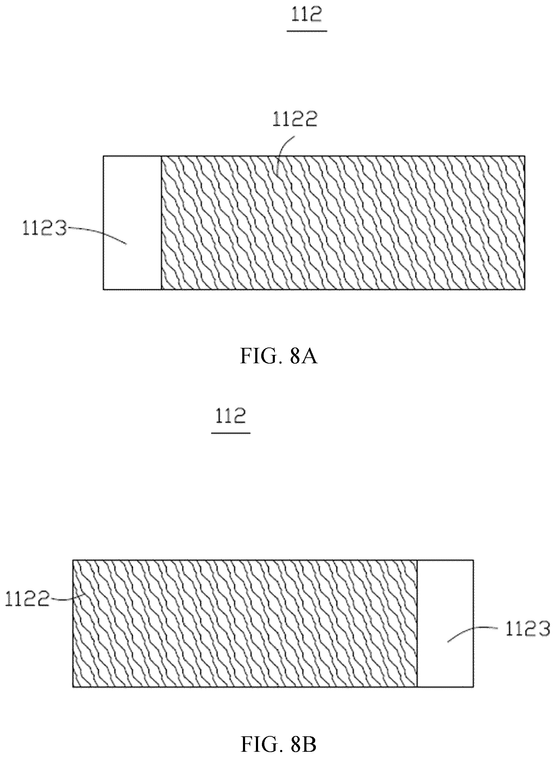

In some embodiments, referring to FIG. 8A, the second blank foil region 1123 is located at a winding start end of the second electrode plate 112. The second blank foil region 1123 is electrically connected to the winding needle 114. The winding needle 114 is electrically connected to the second housing 122. In this embodiment, the first electrode plate 111 in the battery 10 is directly connected to the first housing 121 by the first blank foil region 1113, thereby omitting the tab used as an intermediate connection structure in existing batteries, and in turn, improving the energy density of the battery 10. The second electrode plate 112 in the battery 10 is electrically connected to the central winding needle 114 of the electrode assembly 11 by the second blank foil region 1123 to export electricity, thereby making efficient use of the central vacant space of the electrode assembly 11 and avoiding occupation of peripheral space of the electrode assembly 11, and in turn, increasing the energy density of the battery 10.

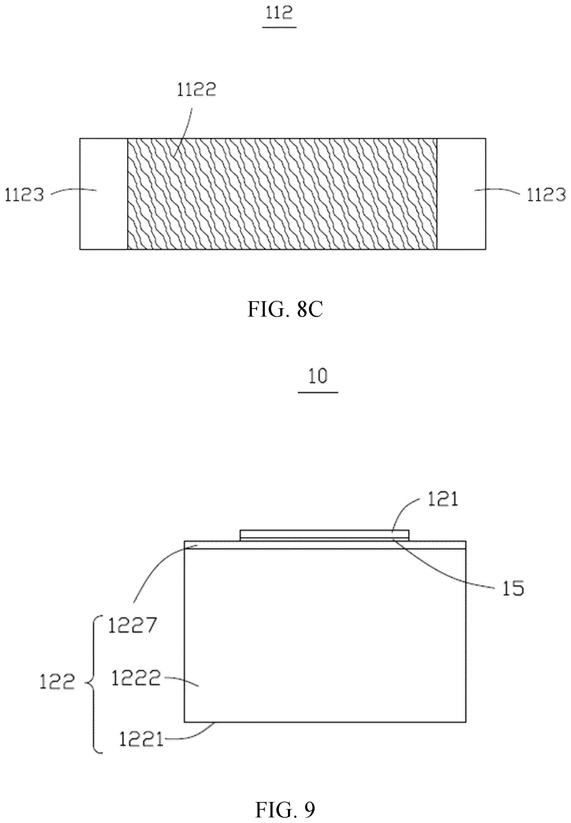

In other embodiments, referring to FIG. 8C, the second blank foil region 1123 is located at a winding start end of the second electrode plate 112 and a winding termination end of the second electrode plate 112. The second blank foil region 1123 located at the winding start end of the second electrode plate 112 is electrically connected to the winding needle 114. The winding needle 114 is electrically connected to the second housing 122. The second blank foil region 1123 located at the winding termination end of the second electrode plate 112 is electrically connected to the second housing 122. The battery 10 in this embodiment is electrically connected to the second housing 122 by the winding needle 114 and the second blank foil region 1123 located at the winding termination end of the second electrode plate 112 separately, thereby enhancing the fast charging performance of the battery 10 significantly.

In some other embodiments, referring to FIG. 8B, the second blank foil region 1123 is located at the winding termination end of the second electrode plate 112. In this case, the winding needle 114 is not electrically connected to the housing assembly 12, indicating that the winding needle 114 just serves the purpose of assisting in completing the winding of the electrode assembly 11.

In some embodiments, referring to FIG. 2A and FIG. 2B, the battery 10 further includes a first insulation piece 14. The first insulation piece 14 connects the winding needle 114 and the first housing 121 to electrically insulate the winding needle 114 from the first housing 121. Understandably, in other embodiments, when the first blank foil region 1113 is electrically connected to the second housing 122, the winding needle 114 is electrically connected to the first housing 121. In this case, the first insulation piece 14 connects the winding needle 114 and the second housing 122 to electrically insulate the winding needle 114 from the second housing 122.

In some embodiments, referring to FIG. 2, the battery 10 further includes a second insulation piece 15. The second insulation piece 15 connects the first housing 121 and the second housing 122 to electrically insulate the first housing 121 from the second housing 122.

In some embodiments, the winding needle 114 is formed in one piece or by splicing.

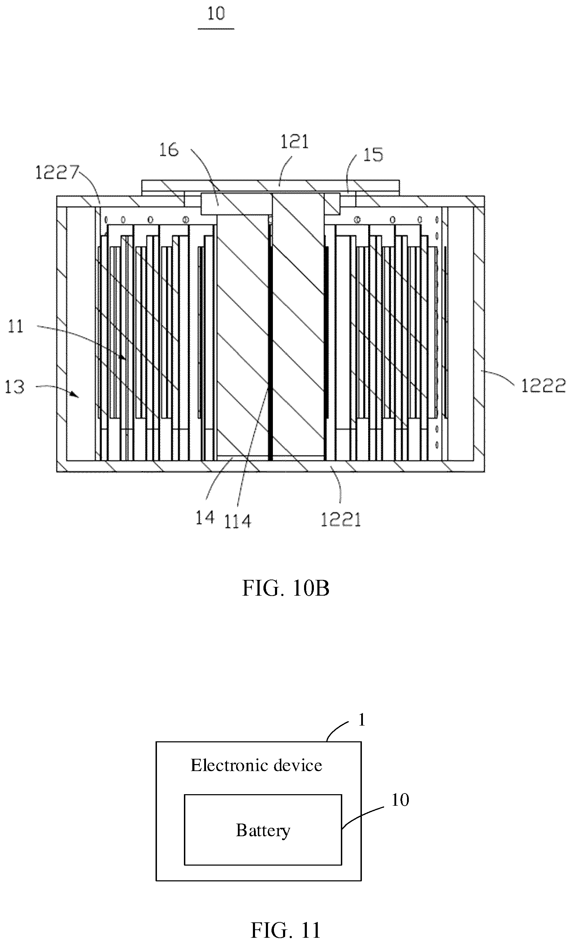

Referring to FIG. 11, an embodiment of this application further provides an electronic device 1. The electronic device 1 includes the battery 10. The electronic device 1 may be a mobile electronic device, an energy storage device, an electric vehicle, a hybrid electric vehicle, or the like. The mobile electronic device may be a mobile phone, a wearable electronic device, a tablet computer, a notebook computer, or the like.

The following describes the battery 10 in this application in detail with reference to embodiments.

### Embodiment 1

Referring to FIG. 1, FIG. 2A, and FIG. 2B, a battery 10 includes an electrode assembly 11, a housing assembly 12, a first insulation piece 14, and a second insulation piece 15. The housing assembly 12 defines an accommodation space 13 for accommodating the electrode assembly 11.

Referring to FIG. 1, in Embodiment 1, the housing assembly 12 is made of a conductive material. The housing assembly 12 includes a first housing 121 and a second housing 122 connected to the first housing 121.

The conductive material is not limited to one or more of a steel alloy, an aluminum alloy, an iron alloy, a copper alloy, a nickel alloy, or stainless steel.

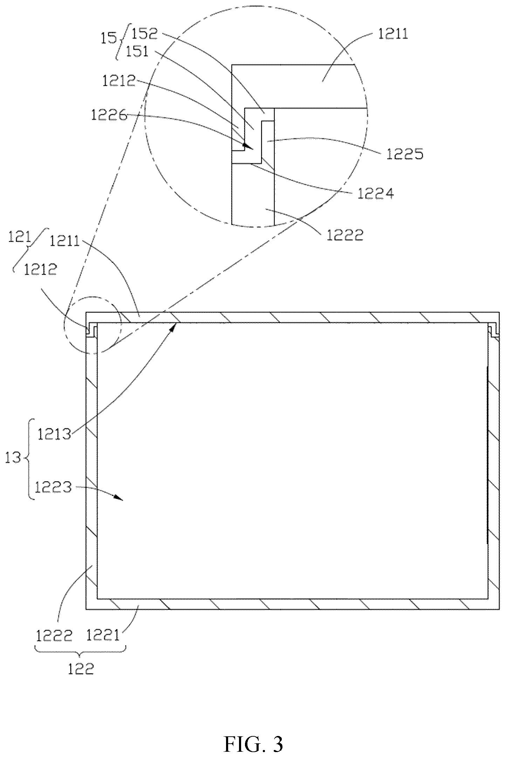

Referring to FIG. 2A and FIG. 3, the second housing 122 includes a bottom plate 1221 and a side plate 1222. The side plate 1222 encloses the bottom plate 1221 to combine with the side plate 1222 to form a first accommodation space 1223. The side plate 1222 includes a first surface 1224 oriented back against the bottom plate 1221. In Embodiment 1, the bottom plate 1221 is circular. In other embodiments, the shape of the bottom plate 1221 may be a regular shape such as a rectangle or other irregular shapes, without being limited herein.

In Embodiment 1, referring to FIG. 2, the second housing 122 further includes a first protruding portion 1225. The first protruding portion 1225 is disposed protrusively on the first surface 1224, and combines with the first surface 1224 to form an accommodation groove 1226.

The second housing 122 may be formed in one piece. In other embodiments, the bottom plate 1221, the side plate 1222, and the first protruding portion 1225 may be connected as a whole by welding instead.

Referring to FIG. 3, the first housing 121 includes a top plate 1211 and a second protruding portion 1212. The second protruding portion 1212 is disposed protrusively on the rim of the top plate 1211 to combine with top plate 1211 to form a second accommodation space 1213. When the second protruding portion 1212 is correspondingly accommodated in the accommodation groove 1226, the first protruding portion 1225 is accommodated in the second accommodation space 1213 concurrently, so as to implement connection between the first housing 121 and the second housing 122. In this case, the first accommodation space 1223 and the second accommodation space 1213 communicate with each other to jointly form the accommodation space 13 for accommodating the electrode assembly 11.

The first housing 121 may be formed in one piece. In other embodiments, the top plate 1211 and the second protruding portion 1212 may be connected as a whole by welding instead.

Referring to FIG. 3, the second insulation piece 15 located in between connects the first housing 121 and the second housing 122 to electrically insulate the first housing 121 from the second housing 122.

Referring to FIG. 3, in Embodiment 1, the second insulation piece 15 includes a first section 151 and a second section 152. The first section 151 is disposed in the accommodation groove 1226. The second section 152 is connected to the first section 151, and is disposed on a surface that is of the first protruding portion 1225 and that is oriented back against the first surface 1224. In this way, when the second protruding portion 1212 is accommodated in the accommodation groove 1226, the second insulation piece 15 isolates the first housing 121 from the second housing 122 to implement electrical insulation between the first housing 121 and the second housing 122.

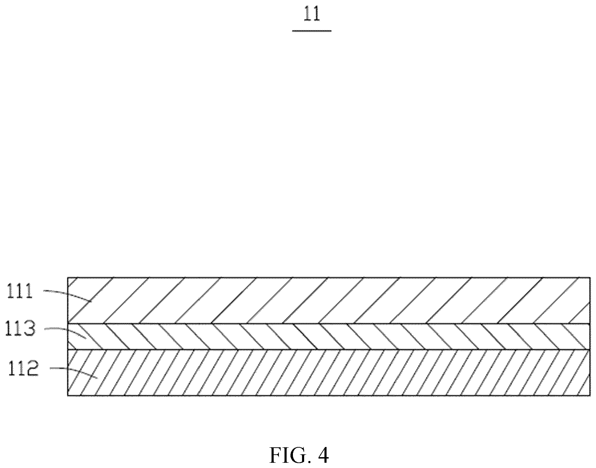

Referring to FIG. 2A, FIG. 2B, and FIG. 4, the electrode assembly 11 includes a first electrode plate 111, a second electrode plate 112, a separator 113 located between the first electrode plate 111 and the second electrode plate 112, and a winding needle 114. The first electrode plate 111, the separator 113, and the second electrode plate 112 form the electrode assembly 11 by winding around the winding needle 114 that serves as a central axis.

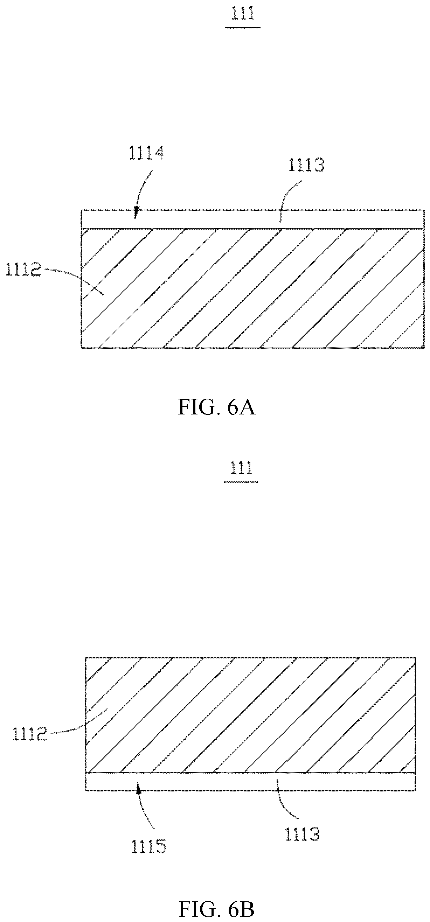

Referring to FIG. 5A and FIG. 6A, the first electrode plate 111 includes a first current collector 1111 and a second active material layer 1122 disposed on the first current collector 1111. The first current collector 1111 includes a first edge region 1114 opposite to the top plate 1211.

Referring to FIG. 2B, FIG. 5A, and FIG. 6A, in Embodiment 1, the first current collector 1111 includes a first blank foil region 1113. The first blank foil region 1113 is located at the first edge region 1114, and the first blank foil region 1113 extends from a winding start end of the first electrode plate 111 toward a winding termination end of the first electrode plate 111. The first blank foil region 1113 is electrically connected to the first housing 121. Neither side of the first blank foil region 1113 is coated with the first active material layer 1112. In other embodiments, referring to FIG. 5B, one side of the first blank foil region 1113 is not coated with the first active material layer 1112.

Referring to FIG. 2B, FIG. 7A, and FIG. 8C, the second electrode plate 112 includes a second current collector 1121 and a second active material layer 1122 disposed on the second current collector 1121. The second current collector 1121 includes a second blank foil region 1123. The second blank foil region 1123 is located at a winding start end of the second electrode plate 112 and a winding termination end of the second electrode plate 112. The second blank foil region 1123 located at the winding start end of the second electrode plate 112 is electrically connected to the winding needle 114. The winding needle 114 is electrically connected to the bottom plate 1221 of the second housing 122. The second blank foil region 1123 located at the winding termination end of the second electrode plate 112 is electrically connected to the side plate 1222 of the second housing 122.

Referring to FIG. 7A, neither side of the second blank foil region 1123 is coated with the second active material layer 1122. In other embodiments, referring to FIG. 7B, only one side of the second blank foil region 1123 is not coated with the second active material layer 1122. In another embodiment, referring to FIG. 7C, one side of the second blank foil region 1123 located at the winding start end of the second electrode plate 112 is not coated with the second active material layer 1122. Neither side of the second blank foil region 1123 located at the winding termination end of the second electrode plate 112 is coated with the second active material layer 1122. Alternatively, referring to FIG. 7D, neither side of the second blank foil region 1123 located at the winding start end of the second electrode plate 112 is coated with the second active material layer 1122. One side of the second blank foil region 1123 located at the winding termination end of the second electrode plate 112 is not coated with the second active material layer 1122.

Referring to FIG. 2A and FIG. 2B, the first insulation piece 14 located in between connects the top plate 1211 and the winding needle 114 to electrically insulate the first housing 121 from the winding needle 114.

### Embodiment 2

Embodiment 2 differs from Embodiment 1 in the location of the second blank foil region 1123.

In Embodiment 2, referring to FIG. 8A, the second blank foil region 1123 is located at the winding start end of the second electrode plate 112 alone. The second blank foil region 1123 is electrically connected to the winding needle 114. In this way, the second blank foil region 1123 is electrically connected to the bottom plate 1221 of the second housing 122 by means of the winding needle 114.

### Embodiment 3

Embodiment 3 differs from Embodiment 2 in the locations of the first blank foil region 1113, the winding needle 114, and the first insulation piece 14.

Referring to FIG. 6B, the first current collector 1111 further includes a second edge region 1115 opposite to the bottom plate 1221. In Embodiment 3, the first blank foil region 1113 is located at the second edge region 1115, and the first blank foil region 1113 extends from a winding start end of the first electrode plate 111 toward a winding termination end of the first electrode plate 111. The first blank foil region 1113 is electrically connected to the bottom plate 1221 of the second housing 122.

In Embodiment 3, the winding needle 114 is electrically connected to the top plate 1211 of the first housing 121. In this way, the first insulation piece 14 connects the winding needle 114 and the bottom plate 1221 of the second housing 122 to electrically insulate the winding needle 114 from the second housing 122.

### Embodiment 4

Embodiment 4 differs from Embodiment 2 in that: the electrode assembly 11 in Embodiment 4 contains no winding needle 114, and the second blank foil region 1123 in Embodiment 4 is located in a different position.

In Embodiment 4, the electrode assembly 11 is formed by winding the first electrode plate 111, the second electrode plate 112, and the separator 113. Referring to FIG. 8B, the second blank foil region 1123 is located at the winding termination end of the second electrode plate 112. In this way, the second blank foil region 1123 is electrically connected to the side plate 1222 of the second housing 122.

### Embodiment 5

Embodiment 5 differs from Embodiment 3 in the structures of the first housing 121, the second housing 122, and the second insulation piece 15.

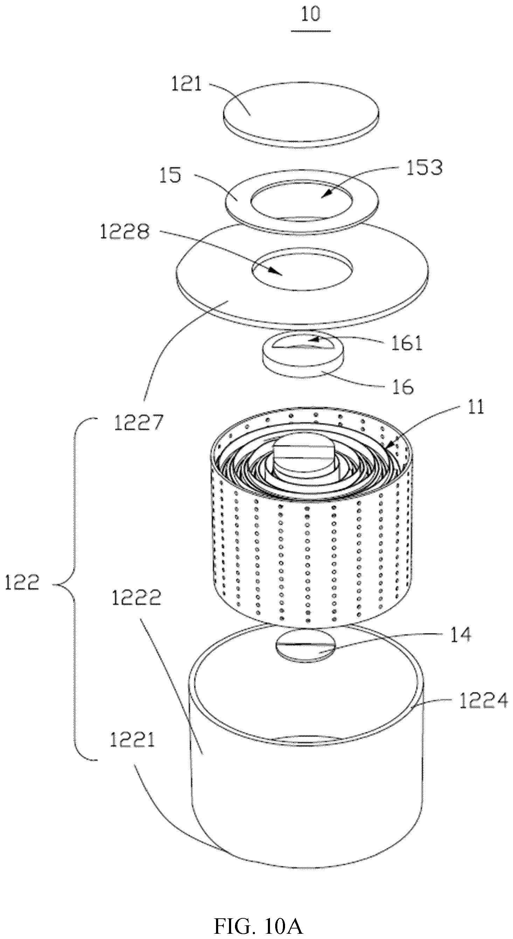

In Embodiment 5, referring to FIG. 9, FIG. 10A, and FIG. 10B, the second housing 122 includes a bottom plate 1221, a side plate 1222, and a cover plate 1227. The side plate 1222 encloses the bottom plate 1221 to combine with the side plate 1222 to form the accommodation space 13. The side plate 1222 includes a first surface 1224 oriented back against the bottom plate 1221. The cover plate 1227 is connected to the first surface 1224. The cover plate 1227 may be connected to the side plate 1222 by welding.

Referring to FIG. 10A and FIG. 10B, an opening 1228 is made on the cover plate 1227. The opening 1228 communicates with the accommodation space 13. In this way, the winding needle 114 can be exposed to the cover plate 1227 through the opening 1228.

Referring to FIG. 10A and FIG. 10B, the first housing 121 is disposed on a surface that is of the cover plate 1227 and that is oriented back against the bottom plate 1221, and fully covers the opening 1228.

Referring to FIG. 9, FIG. 10A, and FIG. 10B, the second insulation piece 15 disposed between the cover plate 1227 and the first housing 121 to electrically insulate the first housing 121 from the second housing 122. In Embodiment 5, the second insulation piece 15 is annular and includes a hole 153 that communicates with the opening 1228. In this way, the winding needle 114 runs through the opening 1228 and the hole 153 sequentially to get electrically connected to the first housing 121.

Referring to FIG. 10A and FIG. 10B, further, in Embodiment 5, the battery 10 further includes a third insulation piece 16. The third insulation piece 16 is located between the electrode assembly 11 and the first housing 121 to avoid a short circuit caused by direct contact between the electrode assembly 11 and the first housing 121. A through port 161 is made on the third insulation piece 16. In this way, the winding needle 114 can run through the through port 161, the opening 1228, and the hole 153 sequentially to get electrically connected to the first housing 121.

### Embodiment 6

Embodiment 6 differs from Embodiment 5 in the location of the first blank foil region 1113.

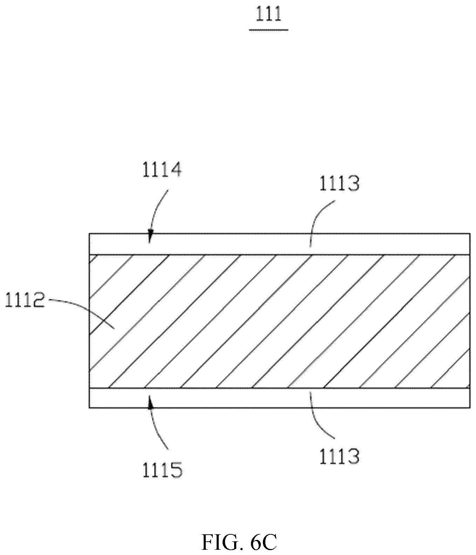

Referring to FIG. 6C, in Embodiment 6, the first blank foil region 1113 is located at each of edge regions on two opposite sides of the first current collector 1111. That is, the first blank foil region 1113 is located in the first edge region 1114 and the second edge region 1115. The first blank foil region 1113 located in the first edge region 1114 is electrically connected to the cover plate 1227 of the second housing 122, and the second blank foil region 1123 located in the second edge region 1115 is electrically connected to the bottom plate 1221 of the second housing 122.

### Embodiment 7

Embodiment 7 differs from Embodiment 5 in the location of the first blank foil region 1113.

Referring to FIG. 6A, in Embodiment 7, the first blank foil region 1113 is located at a first edge 22. The first edge region 1114 is electrically connected to the cover plate 1227 of the second housing 122.

The foregoing embodiments are merely intended for describing the technical solutions of this application but not intended as a limitation. Although this application is described in detail with reference to the foregoing optional embodiments, a person of ordinary skill in the art understands that modifications or equivalent substitutions may be made to the technical solutions of this application without departing from the spirit and essence of the technical solutions of this application.

## Claims

1. A battery, comprising an electrode assembly and a housing assembly, wherein the housing assembly defines an accommodation space for accommodating the electrode assembly, **characterized in that**
the housing assembly is made of a conductive material, the housing assembly comprises a first housing and a second housing connected to the first housing, and the first housing is electrically insulated from the second housing;
the electrode assembly comprises a first electrode plate, a second electrode plate, and a separator located between the first electrode plate and the second electrode plate; the electrode assembly is formed by winding the first electrode plate, the second electrode plate, and the separator; the first electrode plate comprises a first current collector and a first active material layer disposed on the first current collector, and the second electrode plate comprises a second current collector and a second active material layer disposed on the second current collector;
the first current collector comprises a first blank foil region, the first blank foil region is located at an edge region of the first current collector, the first blank foil region extends from a winding start end of the first electrode plate toward a winding termination end of the first electrode plate, and the first blank foil region is electrically connected to one of the first housing or the second housing; and
the second current collector comprises a second blank foil region, the second blank foil region is located at a winding start end of the second electrode plate and/or a winding termination end of the second electrode plate, and the second blank foil region is electrically connected to the other of the first housing or the second housing.

2. The battery according to claim 1, **characterized in that** the electrode assembly further comprises a winding needle; the first electrode plate, the separator, and the second electrode plate form the electrode assembly by winding around the winding needle that serves as a central axis; the second blank foil region is located at the winding start end of the second electrode plate; the second blank foil region is electrically connected to the winding needle; and the winding needle is electrically connected to the first housing or the second housing.

3. The battery according to claim 1, **characterized in that** the electrode assembly further comprises a winding needle; the first electrode plate, the separator, and the second electrode plate form the electrode assembly by winding around the winding needle that serves as a central axis; the second blank foil region is located at the winding start end of the second electrode plate and the winding termination end of the second electrode plate; the second blank foil region located at the winding start end of the second electrode plate is electrically connected to the winding needle; the winding needle is electrically connected to the second housing; and the second blank foil region located at the winding termination end of the second electrode plate is electrically connected to the second housing.

4. The battery according to claim 1, **characterized in that** the electrode assembly further comprises a winding needle; the first electrode plate, the separator, and the second electrode plate form the electrode assembly by winding around the winding needle that serves as a central axis, and the second blank foil region is located at the winding termination end of the second electrode plate.

5. The battery according to claim 1, **characterized in that** the first blank foil region is located at each of edge regions on two opposite sides of the first current collector.

6. The battery according to claim 1, **characterized in that** at least one side of the first blank foil region is not coated with the first active material layer, and at least one side of the second blank foil region is not coated with the second active material layer.

7. The battery according to any one of claims 2 to 4, **characterized in that** the battery further comprises a first insulation piece, and the first insulation piece connects the winding needle and the first housing to electrically insulate the winding needle from the first housing.

8. The battery according to any one of claims 2 to 4, wherein the winding needle is formed in one piece or by splicing.

9. The battery according to any one of claims 1 to 6, **characterized in that** the battery further comprises a second insulation piece, and the second insulation piece connects the first housing and the second housing to electrically insulate the first housing from the second housing.

10. An electronic device, **characterized in that** the electronic device comprises the battery according to any one of claims 1 to 9.
